# EUROPÄISCHE PATENTSCHRIFT

(11) **EP 1 909 587 B1**
(45) Veröffentlichungstag und Bekanntmachung des Hinweises auf die Patenterteilung: **05.08.2009**
(21) Anmeldenummer: 06753963.5
(22) Anmeldetag: 30.05.2006
(51) Int. Cl.: A22B 5/00, B26B 25/00

(54) **KLINGE UND ANSCHLUSSHÜLSE EINES SCHNEIDMESSERS FÜR EINE VORRICHTUNG ZUM FREISCHNEIDEN DES ENDDARMS EINES SCHLACHTTIERES**
BLADE AND CONNECTION SLEEVE OF A KNIFE FOR AN APPARATUS FOR CUTTING OFF THE RECTUM OF A SLAUGHTERED ANIMAL
LAME ET MANCHE DE RACCORDEMENT DE COUTEAU POUR DISPOSITIF POUR DEGAGER PAR COUPE LE RECTUM D'UN ANIMAL ABATTU

(30) Priorität: 02.08.2005 DE 202005012122 U
(43) Veröffentlichungstag der Anmeldung: 16.04.2008
(73) Patentinhaber: SCHMID & WEZEL GmbH & Co., 75433 Maulbronn (DE)
(72) Erfinder: LAY, Norbert, 71149 Bondorf (DE)
(74) Vertreter: Dreiss, Uwe
(86) Internationale Anmeldenummer: PCT/EP2006/005127
(87) Internationale Veröffentlichungsnummer: WO 2007/014587

(56) Entgegenhaltungen:
- EP-A- 0 492 735
- DE-A1- 2 313 092
- DE-U1-5202004 019 19

## Beschreibung

Die Erfindung betrifft eine Klinge und eine diese tragende Anschlusshülse der im Oberbegriff der Schutzansprüche 1 beziehungsweise 8 genannten Art. Diese sind bekannt (DE 20 2004 019 195 U1; DE 2313 092 A1; US 5 4119 738 A; US 6 641 475 B1 US 4 023 237; EP 1 354 517 A1).

Der Erfindung liegt die Aufgabe zugrunde, diese Klinge und die sie tragende Anschlusshülse so zu verbessern, dass die Abnutzung der Klinge im Betrieb verringert und damit die Standzeit erhöht wird.

Erfindungsgemäß erfolgt dies mit den Merkmalen der Ansprüche 1 beziehungsweise 8. Vorteilhafte Weiterbildungen sind in den Unteransprüchen definiert.

Mit einer Ausbildung dieser Klinge und der sie tragenden Anschlusshülse konnte die Standzeit der Klinge von etwa 1.500 Schnitten auf jetzt ca. 15.000 Schnitte, das heißt auf etwa das 10-fache, erhöht werden.

Die Anschlusshülse leistet dazu einen Beitrag, dass durch ihre erfindungsgemäße Ausbildung die Unwucht bei Drehung und damit die Unwucht des Systems Klinge/Anschlusshülse verringert. Die Unwucht ergab sich beim Stand der Technik durch die Fixierung an der Hohlwelle der Vorrichtung drei Schrauben entlang des Umfangs mit (DE '195, Bezugszeichen 55).

Ein Ausführungsbeispiel der Erfindung und ihrer vorteilhaften Weiterbildungen werden im Folgenden anhand der beigefügten Zeichnungen näher beschrieben.

Es stellen dar:
- Figur 1: einen Querschnitt durch die eingangs erwähnte Vorrichtung mit einem Schneidmesser 3 - bestehend aus Klinge 11 und Anschlusshülse 12 - gemäß einem Ausführungsbeispiel der Erfindung;
- Figur 2: die Klinge 11;
- Figur 2a: das Detail IIa in Figur 2 in vergrößerter Darstellung;
- Figur 3: die Anschlusshülse 12.

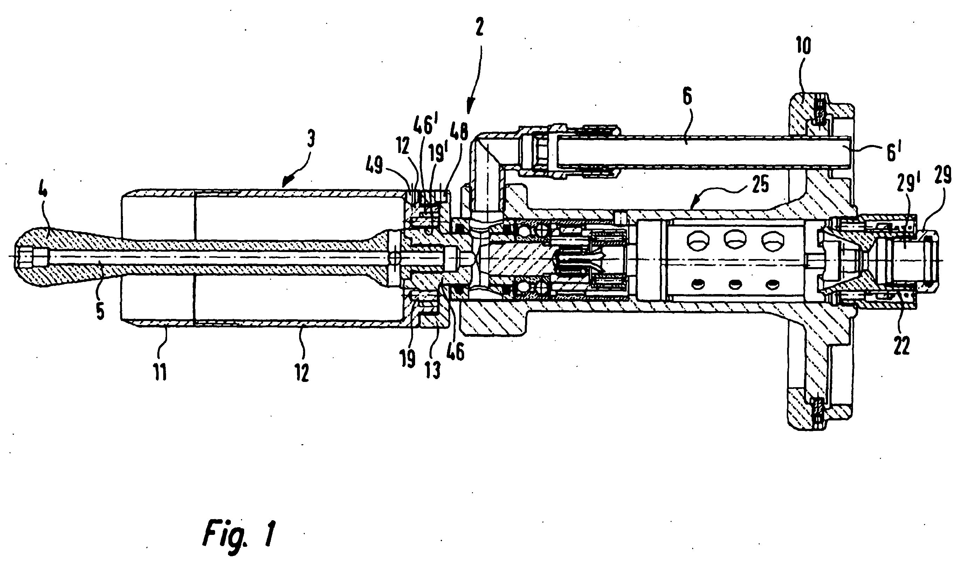

Figur 1 zeigt eine Vorrichtung 2 zum Freischneiden des Enddarms von Schlachttieren. Mit einer solchen Vorrichtung wird beim Teilen eines Schlachttieres in zwei Hälften der Enddarm vom umgebenden Gewebe gelöst. Dazu wird ein Führungsdorn 4 in das Rektum eingeführt und das von dem mit Luftdruck arbeitenden Motor 25 gedreht. Die hohlzylindrische Klinge 11 wird entlang von Schlossbein und Wirbelsäule des Schlachttieres geführt. Innerhalb des Führungsdorns 4 ist eine Saugleitung 5 vorgesehen, um den Enddarm anzusaugen, zu halten und den noch vorhandenen Darminhalt (Kot) über das Vakuumanschlussrohr 6 abzusaugen. Gleichzeitig erfolgt das Freischneiden. Das Freischneiden macht es möglich, beim darauf folgenden Teilen des Schlachttieres durch Aufschneiden der Bauchdecke das Darmpaket als Ganzes entlang des Trennschnittes aus dem Körper des Schlachttieres zu entfernen (vgl. auch EP 0 594 791 und AU 573 603 A).

Die Vorrichtung 2 wird mittels einer Überwurfmutter 10 an einer Roboteranschlussplatte (nicht gezeigt) festgeschraubt. Diese weist je eine Auslassöffnung für Vakuum (zum Ansaugen), für Wasser (zur Spülung), für Druckluft (Antrieb des Motors 25) sowie für die Abführung der Abluft des Motors auf (vgl. die oben genannte DE '195). Soweit Figur 1 bisher beschrieben worden ist, gibt sie den bereits in der 20 2004 019 195 U1 beschriebenen Stand der Technik wieder, deren Inhalt durch diese Bezugnahme ausdrücklich zum Teil der hier gegebenen Beschreibung gemacht wird.

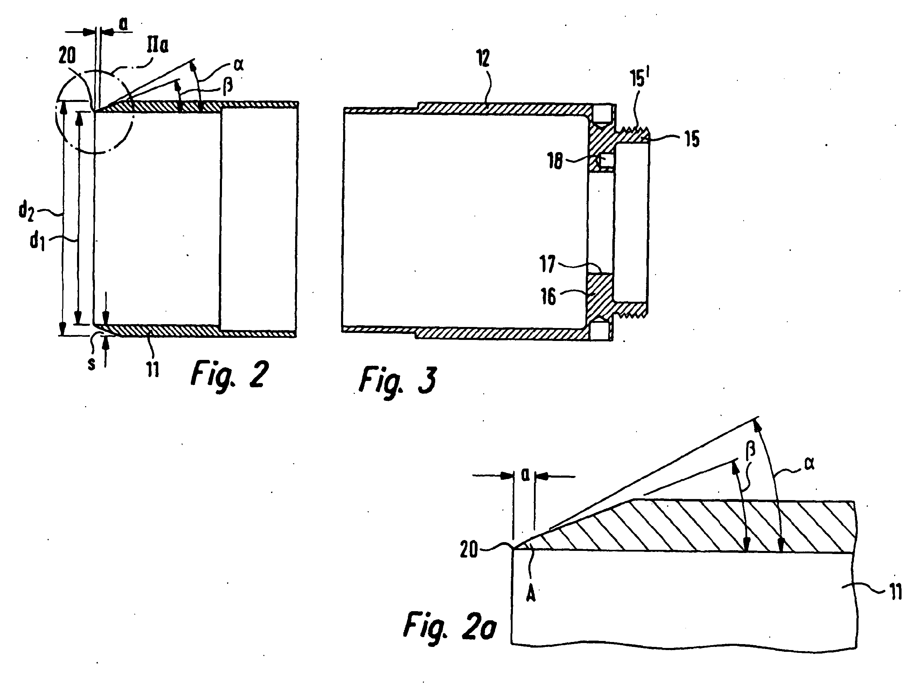

Wie aus Figur 1 zu ersehen, besteht das hohlzylindrische Schneidmesser 3 aus einer hohlzylindrischen Klinge 11 (siehe dazu Figur 2 und 2a) und einer ebenfalls hohlzylindrischen Anschlusshülse 12 (Figur 3). Beide sind miteinander verklebt (Figur 1). Die Klinge 11 ist von ihrer Schneidkante 20 her an einem Längenstück A über eine Länge a = 1,5 mm zunächst mit einem Winkel von α = 27° angeschliffen. Darauf folgt ein Anschliff mit einem Winkel von β = 20°. Der innere Durchmesser d₁ der Klinge 11 beträgt 54 mm, der äußere Durchmesser d₂ ist 60 mm. Die Wandstärke s ist 3 mm. Die in den Schutzansprüchen angegebenen Bereiche haben sich als insgesamt deutlich vorteilhaft erwiesen. Die hier genau angegebenen Masse sind in besonderem Maße günstig.

Die dem Stand der Technik gegenüber deutlich verbesserte Wirkung ist darauf zurückzuführen, dass die zunächst mit 27° angeschliffene Kante einerseits spitz genug abgeschliffen ist, um gut zu schneiden, andererseits aber der Winkel stumpf genug ist, um noch auf die Umgebung des Schnittes einen ausreichend hohen Druck auszuüben, und dass andererseits der anschließende Anschliff mit 20° eine gewisse Entspannung des Schnittgutes unmittelbar dem Schnitt folgend ermöglicht.

Die Anschlusshülse 12 trägt die Klinge 11 und dient zur Verbindung mit der vom Motor 25 angetriebenen Hohlwelle 46 (vgl. Figur 1). Der Motor 25 wird mit Druckluft betrieben, die dem Raum 29' in der Anschlusshülse 29 von der Roboteranschlussplatte (nicht gezeigt) zugeführt wird.

Die Anschlusshülse 12 hat einen zylindrisch Bund 15, dessen Außendurchmesser gegen den Durchmesser der Anschlusshülse 12 etwas zurückgesetzt und daher etwas geringer ist. Der Bund 15 weist ein Außengewinde 15' auf, das zur Verschraubung mit einer Überwurfmutter 13 zur Verbindung mit der Hohlwelle 46 der Vorrichtung 2 dient.

Radial innerhalb des Bundes 15 weist die Stirnfläche 16 der Anschlusshülse 12 eine Öffnung 17 zur Durchführung des Führungsdornes 5 auf. Die Stirnfläche 16 weist ferner entlang ihres Umfangs verteilt drei als Sacklöcher ausgebildete Bohrungen 18 auf, von denen in Figur 3 jedoch nur eine zu sehen ist. In diesen Bohrungen 18 sind Mitnehmerstifte 19 verklemmt, die bei der Montage der Vorrichtung (Figur 1) in zugeordnete und entsprechend angeordnete Löcher 19' in einem Flansch 46' der Hohlwelle 46 hineinragen, so dass auf diese Weise eine feste Drehverbindung von Hohlwelle 46 und Führungsdorn 5 gewährleistet ist.

Die Bohrungen 48 und 49 dienen zum Einstecken eines Schraubenschlüssels, um die Verschraubung der Überwurfmutter 13 an der Anschlusshülse 12 zu erreichen beziehungsweise zu lösen.

## Patentansprüche

1. Klinge für ein Schneidmesser einer Vorrichtung zum Freischneiden des Enddarms von Schlachttieren, wobei der Anschliff der hohlzylindrischen Klinge (11) an ihrer Schneidkante (20) einen bestimmte Winkel zur Innenfläche der hohlzylindrischen Klinge (11) aufweist, **dadurch gekennzeichnet, dass** der Anschliff der Klinge (11) über ein kurzes Längenstück (A) einen ersten Winkel (α) und daran in axialer Richtung anschließend einen zweiten Winkel (β), der geringer ist als der erstgenannte Winkel (α), aufweist.

2. Klinge nach Anspruch 1, **dadurch gekennzeichnet, dass** der zweite Winkel (β) 18° - 22° beträgt.

3. Klinge nach Anspruch 1 oder 2, **dadurch gekennzeichnet, dass** die axiale Länge (a) des erstgenannten Längenstücks (A) ca. 1,5 mm beträgt.

4. Klinge nach einem der Ansprüche 1 bis 3, **dadurch gekennzeichnet, dass** der erstgenannte Winkel (α) = 27° beträgt.

5. Klinge nach einem der Ansprüche 1 - 4, **dadurch gekennzeichnet, dass** der zweitgenannte Winkel (β) = 20° beträgt.

6. Klinge nach einem der Ansprüche 1 - 5, **dadurch gekennzeichnet, dass** die Wandstärke ca. 3 mm beträgt.

7. Klinge nach Anspruch 6, **dadurch gekennzeichnet, dass** der Außendurchmesser ca. 60 mm und der Innendurchmesser ca. 54 mm beträgt.

8. Anschlusshülse (12), **dadurch gekennzeichnet, dass** sie mit einer Klinge (11) nach einem der Ansprüche 1 - 7 verbunden ist, wobei die Anschlusshülse (12) zum Anschluss an die genannte Vorrichtung zum Freischneiden des Enddarms einen Bund (15) aufweist, der auf seiner Außenseite mit einem Gewinde (15') versehen ist.

9. Anschlusshülse nach Anspruch 8, **dadurch gekennzeichnet, dass** die Anschlusshülse (12) innerhalb des Bundes (15) Mitnehmerstifte (19) aufweist, von denen das andere dieser beiden Teile (18, 19) am Flansch (46') einer drehangetriebenen Hohlwelle (46) vorgesehen und zum Eingriff mit dem entsprechenden Teil geeignet ist.

## Claims

1. Blade for a knife of a device for cutting off the rectum of slaughtered animals, wherein the ground section of the hollow cylindrical blade (11) at its cutting edge (20) is at a specific angle with respect to the interior surface of the hollow cylindrical blade (11), **characterized in that** the ground section of the blade (11) is provided over a short portion of its length (A) with a first angle (α) and, subsequent thereto in axial direction, with a second angle (β), which is smaller than the first angle (α).

2. Blade according to claim 1, **characterized in that** the second angle (β) is between 18° and 22°.

3. Blade according to claim 1 or 2, **characterized in that** the axial length (a) of the fist-mentioned portion (A) is approximately 1,5 mm.

4. Blade according to one of the claims 1 to 3, **characterized in that** the first-mentioned angle (α) = 27°.

5. Blade according to one of the claims 1 to 4, **characterized in that** the second-mentioned angle (β) is 20°.

6. Blade according to one of the claims 1 to 5, **characterized in that** the wall thickness is approximately 3 mm.

7. Blade according to claim 6, **characterized in that** the outer diameter is approximately 60 mm and the inner diameter is approximately 54 mm.

8. Connection sleeve (12), **characterized in that** it is connected to a blade (11) according to one of the claims 1 to 7, wherein the connection sleeve (12) is provided with a collar (15) for connection to said device for cutting of the rectum, the collar having a thread (15') on its outer side.

9. Connection sleeve according to claim 8, **characterized in that** the connection sleeve (12), within the collar (15), is provided with carrier pins (19), of these two parts (18, 19) being attached to the flange (46') of a rotary driven hollow shaft (46) and suited for engagement with the corresponding part.

## Revendications

1. Lame pour un couteau d'un dispositif destiné à dégager le rectum des animaux de boucherie, la face affûtée de la lame (11) cylindrique creuse formant, au niveau de son tranchant (20), un angle déterminé avec la face intérieure de la lame (11) cylindrique creuse, **caractérisée en ce que** la face affûtée de la lame (11) formant sur un court tronçon longitudinal (A) un premier angle (α) et, adjacent à celui-ci dans la direction axiale, un deuxième angle (β), qui est plus petit que ledit premier angle (α).

2. Lame selon la revendication 1, **caractérisée en ce que** le deuxième angle (β) mesure 18° - 22°.

3. Lame selon la revendication 1 ou 2, **caractérisée en ce que** la longueur axiale (a) dudit premier tronçon longitudinal (A) mesure environ 1,5 mm.

4. Lame selon l'une quelconque des revendications 1 à 3, **caractérisée en ce que** ledit premier angle (α) mesure 27°.

5. Lame selon l'une quelconque des revendications 1 à 4, **caractérisée en ce que** ledit deuxième angle (β) mesure 20°.

6. Lame selon l'une quelconque des revendications 1 à 5, **caractérisée en ce que** l'épaisseur de paroi est de 3 mm environ.

7. Lame selon la revendication 6, **caractérisée en ce que** le diamètre extérieur est de 60 mm environ et le diamètre intérieur est de 54 mm environ.

8. Manchon de raccordement (12), **caractérisé en ce qu'**il est assemblé à une lame (11) selon l'une quelconque des revendications 1 à 7, ledit manchon de raccordement (12), en vue de son assemblage au dispositif mentionné destiné à dégager le rectum, comportant une bride (15) qui est munie d'un filetage (15') sur son côté extérieur.

9. Manchon de raccordement selon la revendication 8, **caractérisé en ce que** ledit manchon de raccordement (12) comporte, à l'intérieur de sa bride (15), des tétons d'entraînement (19), parmi lesquels l'autre de ces deux éléments (18, 19) est prévu sur le collet (46') d'un arbre creux (46), actionné en rotation, et est approprié à entrer en prise avec l'élément correspondant.
